# EUROPEAN PATENT SPECIFICATION

(11) **EP 2 919 593 B1**
(45) Date of publication and mention of the grant of the patent: **20.04.2016**
(21) Application number: 13783593.0
(22) Date of filing: 29.10.2013
(51) Int. Cl.: A23L 23/00, A23L 23/10, A23L 29/256

(54) **FOOD CONCENTRATE AND A PROCESS TO PRODUCE THE SAME**
LEBENSMITTELKONZENTRAT UND VERFAHREN ZUR HERSTELLUNG DAVON
CONCENTRÉ ALIMENTAIRE ET PROCÉDÉ POUR PRODUIRE LE MÊME

(30) Priority: 16.11.2012 EP 12192894
(43) Date of publication of application: 23.09.2015
(73) Proprietor: Unilever N.V., 3013 AL Rotterdam (NL); Unilever PLC, a company registered in England and Wales under company no. 41424, Greater London EC4Y 0DY (GB)
(72) Inventor: MELLEMA, Michel, NL-3133 AT Vlaardingen (NL); POPP, Alois, Konrad, NL-3133 AT Vlaardingen (NL)
(74) Representative: Tjon, Hon Kong Guno
(86) International application number: PCT/EP2013/072586
(87) International publication number: WO 2014/075913

(56) References cited:
- WO-A1-2012/062919
- WO-A1-2012/097934

## Description

The present invention relates to a food concentrate in the form of a gel. It further relates to a process to prepare the same.

### Background of the invention

Food concentrates are known in the art. Examples are bouillon or stock cubes. Other examples are food concentrates to prepare a soup, a sauce or a gravy. Food concentrates can be used as well to flavour a dish. A food concentrate generally shows a high salt level, and they are therefore not suitable to be eaten as such. In their characteristic, normal use, food concentrates are diluted in an aqueous dilution, which can be water or a liquid dish, and the resulting ready-to-eat product has a considerably higher volume than the volume of the original food concentrate.

The most well-known food concentrates are probably dry cubes, like stock-cubes. In addition to traditional stock cubes, wet food concentrates in the form of a gel, were recently developed. Gelled food concentrates, just like traditional dry stock cubes, allow for dosing of the food concentrate as one unit to a pan of water or to a dish. This is commonly referred to as "unit-dosing". Some important aspects of the food concentrate in the form of gels are its fresh or natural appearance and its speed of dissolution.

Gelled food concentrates have been described which use a combination of xanthan gum with a specific galactomannan as the gelling system. For example WO2007/068484 describes a gelled food concentrate using a combination of xanthan gum and locust bean gum as the gelling system. WO2012/062919 describes a gelled food concentrate using a combination of xanthan gum and iota-carrageenan as a gelling system. A challenge in gelled food concentrates such as these described in WO2012/062919 is that many gelling agents that are well-known to work under low-salt conditions show a completely different behaviour at high salt levels. For example, they appear not to form a gel or show significant disadvantages, e.g. relating to storage stability or production conditions.

Similarly,WO2012/097934 discloses a semi-solid food concentrate in the form of a gel or a paste comprising a salt-sensitive gum, salt in an amount sufficient to keep the salt-sensitive gum in a salted-out state, a salt-stable structuring material in an amount effective to provide a semisolid food concentrate, water, which semi-solid food concentrate, after dilution in an aqueous liquid, the aqueous liquid being water, can result in a ready-to-eat end product. The ready-to-eat end product having a viscosity of higher than 15 mPa.s at 20°C, and wherein the salt-stable gelling system is not konjac mannan alone.

The food concentrates in the form of a gel as known in the prior art show disadvantages. To achieve stability in the high-salt environment of savoury food concentrates, often a combination of gelling agents or thickening agents, for example gums, is used as the gelling system. The presence of several gelling or texturing agents in the compositions may provide a non-natural or even artificial appearance to the food concentrate. Furthermore, product formulation becomes increasingly complex as the final texture obtained not only depends on concentration of the total amount of gelling agents, but may depend also on the ratio between the gelling agents.

The gelling systems described in the prior art require a heating step during preparation of the food concentrate, to activate them. A disadvantage of the systems described in the art is that the heating step for activation is often at high temperature, i.e. often higher than 80 °C, or even higher than 90 °C. This requires high energy costs. A typical challenge experienced when utilizing carrageenan is the high preparation temperature required. WO2012/062919 mentions a preparation temperature of 90 °C for pure i-carrageenan, which can be reduced by the addition of xanthan gum, which leads to a melting temperature of 75 °C.

A further disadvantage is that the temperature at which the gel sets, the gelling temperature, appears to be a given of the gelling agents that are used, and appear to be very high for some gelling systems. For example, a iota-carrageenan-xanthan system as mentioned in WO2012/062919 appeared to gel at temperatures higher than 75 °C. The same document indicates an even higher gelling temperature (90-95 ºC) in the absence of xanthan gum. Another problem observed is that for some gelling systems a long solidification time has been described, for example several hours, or up to 48 hours. Such a long solidification time can be problematic during packaging of the gel after the filling step and results in sedimentation of particulate material which may be present in the food concentrate, or spoilage of the lid or seal of the packaging during the solidification process. The speed of solidifying is closely linked to the speed of cooling. The problem of slow solidification is particularly present in the absence of active cooling where it is required that the gel develops quickly after filling at elevated temperature. For this reason, preferred gelling temperatures well exceed room temperature (i.e. >40 °C). Also, preferred solidification times are shorter than 30 min under conditions of cooling of 5 °C per minute (and after that keeping it constant at low temperature).

A further problem observed for several systems is the relatively high melting temperature and the relatively high dissolution time, e.g. several minutes, sometimes more than 10 minutes, when the food concentrate is diluted in hot water of e.g. 80 °C, which is experienced as annoying by the consumer when preparing his/her food. Although for some applications a high melting temperature may be desired, for many applications during cooking, the melting temperature is preferably low. Temperatures typically attained in consumer usage are 60-90 °C, and gel products should preferably be suitable for this whole temperature range, or a range as broad as possible. Dissolution times at 95°C of a unit-dosed portion, for example 25 grams, are preferred to be shorter than 5 min, even more preferably shorter than 2.5 min.

### Summary of the invention

Accordingly, there is a need for a food concentrate in the form of a shape-stable gel (at room temperature = RT = 20°C), which is stabilised by a gelling agent which could be perceived as natural for gelled food products by the consumer. The gelling agent should be able to withstand extremely high salt conditions, as this is common in food concentrates, to allow high dilution factors of the food concentrate, while maintaining the desired taste impact. To simplify the formulation of the food concentrate and control the texture of the food concentrate most easily, a gel is preferred which allows the use of one single gelling agent, preferably at a relatively low concentration.

There is a need for such a food concentrate wherein the activation temperature is relatively low, preferably lower than 80 °C.

There is a need for such a food concentrate, wherein the gelling temperature is not too low during production. A too low gelling temperature is not desired, as this could result in a relatively long time till the gel is sufficiently cooled back from the activation temperature to allow the gel to form.

It is desired that the time to form a mature gel. the solidification time of the gel, can be tailored to the need of the production line and the recipe of the food concentrate, and is not a given that results from the gelling agent that is used.

There is a need for such a concentrate food product wherein the melting temperature is relatively low, preferably wherein the melting temperature can be adjusted to the application of use, e.g. the specific dish or sauce type, of the consumer.

There is a need for such a food concentrate which preferably dissolves relatively fast in hot water, and therefore has a relatively short dissolution time.

In addition, there is a need for a process to produce a food concentrate with above mentioned advantages in an efficient way. The energy costs of the production process are preferably as low as possible, with a low processing temperature and no requirement for active cooling.

It was surprisingly found that the above mentioned aims were met, at least partly, by a composition according to the invention. The invention relates to a packaged food concentrate in the form of a gel, comprising:
- from 7 to 40 wt% of salt, wt% based on the total water content, wherein the amount of salt is calculated as (weight of salt / (weight of salt + weight of total water content))*100%,
- water
- dissolved kappa-carrageenan, wherein kappa-carrageenan is present in an amount of from 0.1 wt % to 4 wt% (wt% based on the total water content, and calculated as (weight of kappa-carrageenan)/(weight of kappa-carrageenan + weight of total water content))*100%,
- taste imparting components.

The invention further relates to a process to prepare a packaged food concentrate according to the invention, the process comprising the steps of:
a) Providing a mixture comprising kappa-carrageenan and water,
b) Heating the mixture comprising kappa-carrageenan and water to a temperature of higher than 60°C,
c) Adding taste imparting ingredients,
d) Dissolving salt in the mixture resulting from step b) or c),
e) Filling the mixture resulting from step d) into a packaging,
f) Solidifying,
to result in a packaged food concentrate in the form of a gel.

### Detailed description of the invention

### Definitions

'Gelling temperature' is defined as the temperature at which a liquid pre-mix for a gel starts to solidify. This is considered as the start of gel formation. In a rheological experiment this can for instance be observed by an increase in elastic modulus during a cooling traject. The criterion for gelation is when G'>G" and G'>10 Pa. A cooling or heating traject can have various rates, though in this patent we will refer to cooling as subjecting a gel in a package (25 g) to room temperature, and to heating as subjecting a gel (25 g) to a gradually increasing temperature.

'Solidification time' is defined as the time needed to form a mature gel. For comparative purposes, it is defined as the time it takes for an ingredient mixture to form a mature gel when allowed to cool down from the activation temperature to room temperature, and after that keeping it at room temperature. In a rheological experiment, the criterion for mature gel formation is when increase of G' is steepest, i.e. when taking the derivative of G' as a function of time, it is the time at which the derivative is highest.

'Cooling' traject is the controlled decrease of temperature from activation temperature to for example gelling temperature with a defined amount of degrees per minute.

'Melting temperature' is defined as the temperature wherein the food concentrate starts to melt. In a rheological experiment this can be observed by a decrease in elastic modulus G' upon increasing temperature.

'Dissolution time' is defined as the time needed for a food concentrate to dissolve in water or in a dish. For comparative purposes, the dissolution time can be quantified by a dissolution test as provided in this description.

'Activation temperature' is defined as the highest temperature up to which the ingredient mixture is heated during production.

### Food concentrate

The food concentrate of the present invention is in the form of a gel. Preferably, the gel is a self-sustaining gel. A gel is known to the person skilled in the art of gelled food concentrates as a semi-solid structure. A semi-solid gel texture allows the consumer of the food concentrate to remove the food concentrate from its packaging easily and in one piece. This is referred to in the field as unit dosing, an advantage shared with traditional, dry bouillon cubes. Such a gel may allow making easy scoops for example with a spoon, which may be preferred for multi-dosage packagings. The semi-solid, preferably self-sustaining gel texture is present at least at room temperature (20°C). The semi-solid gel texture prevents that the food concentrate flows apart, like a liquid, after or during removal from its packaging and allows it to maintain the shape, which at least to a certain extent reflects the shape the product had when present in its packaging, in this way allowing the desired unit-dosing. The gel can deform under pressure or gravity to some extend, depending on how strong the gel is, but that the gel contains elasticity which brings it back in the original shape after removal of the pressure. The gel therefore preferably is an elastic gel.

The food concentrate of the invention preferably shows a rheology wherein the elastic modulus (G') is higher than the viscous modulus (G"). The ratio elastic modulus (G') to viscous modulus (G") is preferably higher than 1, more preferably higher than 3. The elastic modulus (G') is preferably higher than 10 Pa, more preferably higher than 15 Pa, even more preferably higher than 20 Pa, most preferably higher than 30 Pa. It is especially preferred that the ratio elastic modulus (G') to viscous modulus (G") is preferably higher than 1, more preferably higher than 3, wherein the elastic modulus is higher than 10 Pa, preferably higher than 15 even more preferably higher than 20 Pa. The combiantion of this minimum ration of G'/G" and minimum level of G' provided an optimal texture to a gel of the invention. The elastic modulus (G') is preferably lower than 9000 Pa, more preferably lower than 5000 Pa, most preferably lower than 1000 Pa. In combination with these G' values, the viscous modulus (G") is preferably higher than 1 Pa, more preferably higher than 3 Pa, most preferably higher than 5 Pa. The viscous modulus (G") is preferably lower than 200 Pa, more preferably lower than 50 Pa. Elastic and viscous moduli are terms known in the art of rheology. They have been described for example in "Das Rheologie Handbuch, Thomas Mezger, Curt R. Vincentz-Verlag, Hannover, 2000".

The protocol for measuring the elastic and viscous modulus is as following:
- A state of the art rheometer such as the AR G2 (TA Instruments, New Castle, Delaware, USA) or Physica MCR 300 (Anton Paar GmbH, Graz, Austria) are suitable for this measurement;
- Parallel plates geometry, preferred plates with sandblasted surface
- Profile: Temperature sweep followed by time sweep test:
   a. Load the sample at preparation temperature. Preparation temperature is normally the temperature which is used to activate the gelling system. If the preparation temperature is unknown, the melting temperature can be used, which can found by a gradual increase in temperature. In the latter situation, the sample is loaded when it is (just) melted.
   b. Cool from loading temperature to 20 °C at a rate of 5°C/min while measuring the Elastic modulus (G') and viscous Modulus (G") at a strain of within the linear visco-elastic region (pre-determined by a strain sweep test as shown in 'Das Rheologie Handbuch', T. Metzger) and a frequency of 1 Hz
   c. Keep at 20°C for 10 minutes while measuring G' and G" at the same strain and frequency conditions as during the cooling step b) (time sweep step);
   d. After 10 min, the values for the elastic modulus (G') and the viscous modulus (G") reach a plateau (i.e. they do not grow substantially further) and are taken as elastic modulus and viscous modulus of the gel. If plateau values for G' and G" are not reached after 10 min, allow more time for step c (for example, 20 min).

The gel texture can for example be analysed by a texture analyser, as known in the art. The texture can be further analysed for example using common techniques such as texture analysis of penetration or compression, as measured in with equipments such as a Texture Analyser (e.g. from Stable Microsystems™) or a Universal testing machine (e.g. from Instron™).

### Water

The food concentrate according to the invention comprises water. Water is preferably present in a total amount of from 35 wt% to 90 wt%. More preferably water is present in an amount of from 40 wt% to 80 wt%, more preferably of from 45 wt% to 70 wt%. Water is representing here the total water content of the food composition.

The water activity of the food concentate is preferably of between 0.6 and 0.85, more preferably of between 0.7 and 0.8.

### Salt

The food concentrate preferably comprises from 7 wt% to 40 wt% of salt, based on the water content of the food concentrate. The salt preferably comprises NaCl, preferably is NaCl. Lower salt levels result in less optimal results. The advantage of the present invention was in particular clear for high salt compositions, as at low salt conditions long solidification times were observed or low gelling temperatures, which might easily result in sedimentation of particulate matter or spoilage of the seal of the packaging during production. Preferably, the amount of salt, preferably of NaCl in the food concentrate is from 10 wt% to 40 wt%, even more preferably from 16 wt% to 40 wt%, even more preferably of from 20 wt% to 35 wt%, even more preferably of from 20 wt% to 30 wt%, most preferably of from 20 wt% to 26.5 wt%, based on the weight of the total water content of the food concentrate. As common in the art, the salt content in this context is calculated as [(weight of salt)/(weigth of salt + weight of total water content)]*100%. NaCl is preferably present in an amount of from 7 to 40 wt%, preferably of from 10 to 40 wt%, even more preferably of from 16 wt% to 40 wt%, even more preferably of from 20 wt% to 35 wt%, even more preferably of from 20 wt% to 30 wt%, most preferably of from 20 wt% to 26.5 wt%, based on the weight of the total water content of the food concentrate. At a level of higher than 26.5% on water, NaCl starts to crystallise, and the food concentrate might contain some salt crystals. The salt in the food concentrate is preferably dissolved. The amount of NaCl is calculated as standard in the art, and is according to the following formula: (weight of NaCl) / (weight of NaCl + weight of total water content). For example 5 g NaCl in 20 g total water result in an amount of NaCl of 20 wt% on total water content. When preparing the food concentrate of the invention, these amounts of NaCl can be added during preparation. The same formula is used, mutatis mutandis for calculating other ingredients the amount of which is described as based on the water content, such as for example the kappa carrageenan.

### Gelling agent

The food concentrate of the invention further comprises kappa-carrageenan. Kappa-carrageenan is a product known in the art. Carrageenans are polysaccharides which are derived from seeweed. The carrageenan family comprises several sub-types, among which kappa-carrageenan. Since long times, carrageenans are normaly used to thicken or gel several types of food products like meat, desserts, ice creams etc. To form a gel, some of the carrageenans, such as kappa-carrageenan, rely for their texturing effect on the presence of ions. At low salt conditions, kappa-carrageenan has been described to rely on potassium ions to function as a gelling agent. Kappa-carrageenan is a product that can be purchased from many commercial suppliers, as known to the skilled person. Although these commercial products may be used for this invention, it is noted that these products generally are not pure kappa-carrageenan but may contain varying amounts of sugars or other gelling agents, like iota-carrageenan. In the context of the invention, the amounts indicated for kappa carrageenan refer to kappa-carrageenan as such. This can be relevant to take into account when a commercial product is used comprising other ingredients as well next to kappa-carrageenan.

According to the invention, kappa-carrageenan is preferably present in an amount of from 0.1 wt% to 4 wt%, preferably of from 0.2 wt% to 2 wt%, more preferably of from 0.2 wt%to 1.5 wt%, (wt% based on total water content). As common in the art, the kappa-carrageenan content in this context is calculated as (weight of kappa-carrageenan)/(weight of kappa-carrageenan + weight of total water content).

The kappa-carrageenan is dissolved in the water of the food concentrate. It is therefore in a functional state, and contributes to the texture of the gel, in this way being an active gelling agent. As mentioned, carrageenans have the possibility to lose their gelling behaviour in the presence of high amounts of salt. This phenomenon is called salted-out state. In this state they may precipitate and are not dissolved in the water anymore. The salted-out state can for example be recognised if the kappa-carrageenan does not significantly contribute to the strength of the gel, and gel strength relies on the presence of other gelling agents. One of the advantages of the present invention is that it became possible now to produce a gel at a high salt level using kappa-carrageenan as gelling agent. The kappa-carrageenan in the food concentrate of the present invention is not in the salted-out state, but dissolved..

To reduce the costs and the amount of gelling agents which is mentioned on the packaging of the food concentrate, it is preferred that kappa-carrageenan is the predominant, preferably, the only gelling agent which is present in the food concentate. The amount of kappa-carrageenan is preferably more than 30 wt%, preferably more than 50 wt%, even more preferably more than 80 wt%, based on the total weight of texturing polysaccharides, excluding starch, in the food concentrate. The amount can be from 50 wt% to 100 wt%, preferably of from 80 wt% to 97 wt%, based on the total weight of texturing polysaccharides, excluding starch, in the food concentrate. The amount of xanthan gum, galactomannan and glucomannan taken together is preferably less than 1 wt% more preferably less than 0.5 wt%, even more preferably less than 0.1 wt%, based on the total water content of the concentrate. Preferably, the amount of galactomannan is less than 1 wt%, more preferably less than 0.5 wt%, even more preferably less than 0.25 wt%, based on the total water content. Preferably, the amount of glucomannan is less than 1 wt%, more preferably less than 0.5 wt%, even more preferably less than 0.25 wt%, based on the total water content. Preferably, the amount of xanthan gum is less than 1 wt%, more preferably less than 0.5 wt%, even more preferably less than 0.1 wt%, based on the total water content of the food concentrate. It can be preferred that the food concentrate comprises xanthan gum. Xanthan gum may increase the viscosity of the liquid ingredient mixture (before solidification) at high temperatures in compositions of the invention. Xanthan gum can be present in an amount of from 0 wt% to 2 wt%, or for example of from 0.1 wt% to 2 wt%, more preferably of from 0.1 wt% to 1 wt%, or more preferably of from 0.2 wt% to 1 wt% based on the total water content of the food concentrate. The addition of locust bean gum could be advantageous as well, e.g. to provide a higher gel strength, while not affecting the thermo-reversibility of the gel. Locust bean gum can be present in an amount of from 0 wt% to 1 wt%, preferably of from 0.1 to 0.5 wt%, based on the total water content of the food concentrate. Preferably the amount of guar gum is less than 1 wt%, or preferably less than 0.5 wt%, even more preferably less than 0.1 wt%, based on the total water content. It can be present in an amount of from 0 wt% to 1 wt% for example. For example, it may be preferred that in addition to kappa-carrageenan the composition of the present invention does not contain significant amounts of the combination of xanthan gum and locust bean gum or the combination of xanthan gum and guar gum or of xanthan gum and iota-carrageenan, and the amount of such a combination in the food composition is preferably less than 0.5 wt%, even more preferably less than 0.1 wt%, based on the total water content in the food concentrate.

### Savoury taste enhancer

The food concentrate is preferably a savoury food concentrate, for example for preparing a bouillon, a soup, a sauce, a gravy or a seasoned dish. To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% to 15 wt%, based on the weight of the total food concentrate. An individual taste enhancer as mentioned above may be present in an amount of less than 30 wt%, more preferably of between 0.1 wt% and 30 wt%, preferably in an amount of from 1 wt% to 25 wt%, most preferably in an amount of from 5 wt% to 15 wt%, based on the weight of the total food concentrate.

### Taste imparting components

In the concentrates according to the invention, it is preferred that taste-imparting components are present. They preferably comprise one or more of yeast extract; hydrolyzed proteins of vegetables-, soy-, fish-, or meat-origin; liquid or dissolvable extracts or concentrates selected from the group consisting of meat, fish, crustaceans, herbs, fruit, vegetable and mixtures thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, lamb or chicken (and other fowl). Preferably the plant particles comprise particles selected from the group consisting of onion, garlic, leek, carrot, parsley, tomato and mixtures thereof. Salt is not construed as part of "taste imparting components" or "savoury taste enhancer" but has been indicated as a separate ingredient. Preferably the amount of taste-imparting components as set out above is from 0 wt% to 60 wt% (by weight of the total food concentrate). More preferred from 1 wt% to 60 wt%, even more preferably from 5 wt% to 40%, based on the weight of the total food concentrate.

Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 60 wt%, more preferably from 1 wt% to 60 wt%, even more preferably from 2 wt% to 40 wt% (by weight on the total concentrate). The amount of particles can be of from 0.5 to 30 wt%, more preferably of from 1 to 20 wt%, even more preferably of from 2 to 20 wt% (wet weight based on the weight of the food composition). It can be preferred that the amount of particles is low, for example less than 0.5 wt% or even less than 0.1 wt% (by weight of the total concentrate).

The food concentrate of the present invention preferably comprises flavours. Flavours can be present for example in an amount of for example 0.1 wt% to 10 wt%, more preferably of from 0.5 wt% to 8 wt%, even more preferably of from 1 wt% to 6 wt%, based on the weight of the total food concentrate. The flavours are preferably selected from the group consisting of vegetable flavour, chicken flavour, fish flavour, beef flavour, pork flavour, lamb flavour, meat flavour, yeast extract and mixtures thereof.

### Fat

Fat may be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 30 wt%, more preferably less than 20 wt% of fat, even more preferably less than 16 wt% of fat, even more preferably less than 10 wt% of fat, based on the weight of the total food concentrate. In another preferred aspect, fat may be present in an amount of from 0.5 wt% to 30 wt% of fat, more preferably of from 1 wt% to 15wt% of fat, most preferably of from 3wt% to 10 wt% of fat, based on the weight of the gel. The amount of fat in the gel is preferably as low as possible, for optimal stability. It may be preferred that fat is absent.

### Sugar

The food concentrate of the invention is a normally a savoury food concentrate. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15 wt%, most preferably lower and 10 wt%, based on the weight of the total food concentrate. It can be more than 1%, preferably more than 5 wt% based on the total weight of the concentrate. A suitable range could be of between 1 wt% and 20 wt%, preferably of from 3 wt% to 15 wt% based on the total weight of the concentrate. It may be preferred that the composition is free from sugar or free from any added sugar.

The food concentrate is preferably packaged. The food concentrate is preferably packaged in a tub. The tub is preferably sealed. The tub may be made from plastic.

### Weight

It is preferred that the cooking aid has a weight of between 10 g and 5 kg, preferably of between 10 g and 2 kg, more preferably of between 10 g and 500 g, more preferably of between 15 g and 300 g. Especially for unit dosing, family packagings it might be preferred that the weight of the food concentrate is between 10 g and 50 g, more preferably of between 15 g and 40 g. For multi-dosing formats, the weight may preferably of between 50 g and 1 kg, more preferably of between 100 g and 500g, most preferably of between 150 g and 350 g. The shape of the cooking aid is preferably regular. The shape may be for example a sphere, a pyramid, a cylinder, an oval cylinder, a truncated cone, a cube or an oblong.

### Process

In a further aspect, the present invention relates to a process to provide a food concentrate according to the invention. The process comprises the steps of
a) Providing a mixture comprising kappa-carrageenan and water,
b) Heating the mixture comprising kappa-carrageenan and water to a temperature of higher than 60°C,
c) Adding taste imparting ingredients,
d) Dissolving salt in the mixture resulting from step b) or c),
e) Filling the mixture resulting from step d) into a packaging,
f) Solidifying
to result in a packaged concentrate food product in the form of a gel.

### Step a)

According to the invention, in a first step a) a mixture is provided comprising water and kappa-carrageenan. The kappa-carrageenan in this mixture is at least partly dissolved.

### Step b)

Food concentrates made of kappa carrageenan as a gelling agent at a high salt level have not been described. Although under low-salt conditions kappa-carrageenan may dissolve in water of ambient temperature and form solid gels, it was found that for the process of the present invention a heating step was required (step b) wherein the mixture comprising water and kappa-carrageenan is heated. Omitting the heating step may result in undesired textures, like for example a liquid or a thixotropic texture, which is not desired. The mixture is preferably heated to a temperature lower than 90 °C, preferably lower than 85 °C, even more preferably lower than 80 °C , most preferably lower than 75°C. The mixture is preferably heated to a temperature of higher than 60°C , preferably higher than 65 °C, even more preferably higher than 70 °C, or can be heated to a temperature of higher than 75 °C. The mixture is preferably heated to a temperature of from 60 °C to 90 °C, preferably of from 60°C to 85 °C, even more preferably of from 65 °C to 80 °C. The heating time is preferably as short as possible. The mixture is preferably heated for a period of from 10 to 200 minutes, preferably of from 15 to 100 minutes. The chosen temperature at this stage we call activation temperature.

The skilled person will easily recognise when the kappa-carrageenan is dissolved. Although currently not understood, it was surprisingly observed that for high salt kappa-carrageenan compositions the gelling temperature and the melting temperature of the food concentrate could be manipulated by the temperature to which the ingredient composition is heated during the production process and by the salt concentration. At a constant salt level, a high temperature during the process, for example during the heating step for activation of the kappa carrageenan, results in a high melting temperature of the resulting food concentrate and a high gelling temperature of the food concentrate during production, whereas a lower heating temperature, result in a relatively low melting temperature of the resulting food concentrate and a relatively low gelling temperature of the food concentrate during production. The invention allows modifying the gelling temperature and the solidification time of the food concentrate by the heating temperature during preparation. This provides a great advantage for pumping and filling steps during the production process in a factory, resulting in an efficient production process.

### Step c)

The process further comprises the step c) of adding taste imparting ingredients. Taste imparting ingredients are preferably added before addition of salt, i.e. before step d), or may be added together with salt, during step d). Addition before or during addition of salt results in improved mixing of the taste imparting ingredients into the mixture. In case the food concentrate comprises fat, it might be preferred to add the fat in step c) or after step c). It might be preferred to add the fat before the addition of salt (step d), especially when it is preferred that the fat is emulsified fat. It may be preferred to add the fat in liquid state, for example, after melting the fat. It is furthermore preferred that steps b) to e) of the process according to the invention are conducted at a temperature high enough to keep the fat liquid in order to ensure homogenous distribution of fat within the suspension and later in the gel. To this end, it can be preferred that in case the final food concentrate comprises fat, the temperature during steps b) to e) is higher than the melting temperature of said fat.

### Step d)

In step d) salt, preferably comprising NaCl, is dissolved into the mixture comprising kappa-carrageenan and water. According to the invention, salt, preferably comprising NaCl, is added after the heating of the mixture comprising water and kappa carrageenan. This proved to be relevant to get kappa carrageenan to form a shape stable gel at high salt levels. It allows a relatively short heat activation step b) at relatively low temperature. In addition, the addition of salt at this stage provides an advantageous increase in viscosity during preparation. Salt is preferably added in step d) in an amount of from 7 wt% to 40 wt%, preferably of from 12 wt% to 40 wt%. More preferably of from 15 wt% to 40 wt%, even more preferably of from 20 wt% to 35 wt%, even more preferably of from 20 wt% to 30 wt%, most preferably of from 20 wt% to 26 wt%, based on the total water content of the resulting concentrate food composition. Preferably NaCl is added in an amount of 12 wt% to 40 wt%. More preferably of from 12 wt% to 35 wt%, more preferably of from 15 to 40 wt%, even more preferably of from 20 wt% to 35 wt%, even more preferably of from 20 wt% to 30 wt%, most preferably of from 20 to 26 wt%, based on the total water content of the resulting concentrate food composition. The amount of salt, or of NaCl mutatis mutandis, is calculated as standard in the art, and is according to the following formula: (weight of salt) / (weight of salt + weight of total water content). The salt added in step d) is dissolved, but, as clear to the skilled person, up to the level of saturation. In case salt is added above the saturation level, salt crystals can be formed. Step d) preferably comprises application of shear. Step d) preferably comprises high-shear stirring. By applying shear, optimal mixing and dissolving of the salt into the mixture and an optimal gel texture is provided.

### Step e

In step e) the mixture resulting from step d) is filled in a packaging. The filling can be carried out with a conventional filling apparatus, as known by the skilled person. The filling is preferably done at a temperature of between 60 °C and 85 °C, more preferably of between 65 °C and 80 °C. At this temperature the packaging and filling lane get less spoiled.

### Step f

Preferably, the mixture has an elastic modulus of higher than 30 Pa, even more preferably higher than 50 Pa, right after preparation and before cooling and normally before filling into the packaging. After filling, the mixture is solidified in step f). Solidifying may comprise allowing to solidify. As known to a person skilled in the art, solidification normally results from allowing the mixture to rest for some time at a temperature which is lower than the gelling temperature of the gelling system, e.g. kappa-carrageenan, to the moment that a solid, shape-stable gel has formed. Solidification may be enhanced by cooling. Preferably, step f) comprises cooling. Cooling is preferably carried out at a temperature of between 0°C and 50 °C, preferably at a temperature of between 5 °C and 30 °C, more preferably of between 5 °C and 20°C. It was surprisingly found that the food concentrate of the present invention showed a relatively short solidification time. High salt (iota) carrageenan gels as described in the prior art show a solidification time of up to 48 hours. The solidification time at room temperature of the food concentrate of the present invention is preferably of between 1 and 60 minutes, preferably of between 2 and 30 minutes, more preferably of between 5 and 15 minutes, and can be preferably of between 1 and 10 minutes, for a cube-shaped product of 30 grams at RT. This relatively short solidification time allows efficient production of food concentrates which comprise particulate material, which tends to sediment during solidification of the food concentrate, in this way resulting in inhomogeneous distribution of the particulate material in the food concentrate. The gelling temperature of the mixture resulting from step d) is preferably of between 45 °C and 90 °C, preferably of between 55 °C and 85°C, more preferably of between 60 °C and 80 °C. Preferably the mixture resulting from step d) has a gelling temperature of lower than 80 °C, preferably of lower than 75 °C.

The packaging containing the food concentrate which may or may not be completely solidified, is preferably closed by a seal.

The solidification step f) may be followed by an additional packaging step. Such a packaging step may comprise packaging the packaged food concentrates in a secondary packaging. The secondary packaging may be a box, e.g. made form card board, or a jar or a bag.

In a further aspect, the invention relates to a packaged food concentrate obtainable by a process of the present invention. The food concentrate preferably has a melting temperature of between 65 °C and 90 °C, preferably of between 65 °C and 85 °C, more preferably of between 65 °C and 80 °C.

### Use

In a further aspect, the present invention relates to the use of a food concentrate of the invention to prepare a bouillon, a soup, a gravy, a sauce or a seasoned dish. The food concentrate of the invention is preferably a bouillon concentrate, a soup concentrate, a gravy concentrate, a sauce concentrate or seasoning concentrate. The use according to the present invention preferably comprises diluting the concentrate food composition according to the invention, at least part of it, in an aqueous liquid, or mixing it into a dish. The aqueous liquid is preferably water, but can be a sauce, a soup etc. The dish can be a vegetable dish, meat, fowl, fish etc. The temperature of the aqueous liquid or dish is preferably of between 60 °C and 100 °C, more preferably of between 65 °C and 90 °C, even more preferably of between 70 °C and 95 °C, even more preferably of from 70 °C to 85 °C, even more preferably of from 70 °C to 80 °C. The food composition according to the invention dissolves relatively fast in hot water (e.g. 95 °C). It may be preferred that 25 gram dissolves in 500 ml of 95°C water within 3 minutes, preferably within 2 minutes.

The present invention allows production of savoury food concentrates using kappa-carrageenan as a gelling agent, which have improved melting properties like a reduced melting temperature, for example compared to food concentrates containing carrageenan which are known from the art. A relatively low melting temperature is advantageous for the consumer, as it is associated with a relatively short dissolution or dispersion time during use. The melting temperature of the food concentrate of the present invention is for example lower than 90 °C or preferably lower than 85 °C. The melting time can be adjusted according to what is desired by the consumer for a specific type of food concentrate (bouillon, sauce, gravy or seasoning). The melting temperature is preferably of below 80 °C, more preferably of below 75 °C, even more preferably, below 70 °C, most preferably below 65 °C. The melting temperature is preferably higher than 50 °C, more preferably higher than 55 °C, most preferably higher than 60 °C.

The dissolution time is measured by a conductivity measurement and by visual inspection, as known by a person skilled in the art. As known in the art, dissolving is generally understood as the process wherein a gel melts and goes into solution in a solvent, e.g. water or a liquid dish. Dissolving can be correlated with the melting properties of the gel. Dissolving can be measured via the conductivity increases in the solvent.

### Dissolution test:

### Equipment:

- Heating plate with magnetic stirring
- Magnetic stirrer
- Conductivity meter
- Video camera
- Transparent glass beaker (1 L)
- Metal mesh frame to hold the gel ~2 cm above the bottom of the beaker.

### Procedure:

- 500 ml of tap water is heated to boiling temperature and added to a glass beaker of 1 litre.
- A temperature probe and conductivity probe are placed in the beaker.
- A video camera is adjusted to record the dissolution time (for the visual inspection)
- Once the temperature reaches 100°C, the conductivity measurement and the visual inspection (video recording) are started.
- Approximately 25-30 g of a gel product (shape stable, self-sustaining at RT) is carefully immersed in the hot water and held in place by a meshed metal frame.
- A magnetic stirrer is placed at the bottom of the glass beaker and below the metal frame that holds the gel product. The stirring is kept at 300rpm and is immediately started after immersing the gel product to the boiling water. The temperature is kept between 95-100 °C throughout the test.
- The stirrer does not get in contact with the gel food composition during the test.
- The dissolution time is determined as the time at which 90% of the plateau value for the conductivity is reached and/or by visual inspection (gel "disappearance", recorded video),
- In case variations between conductivity determination and visual inspection occurs, the visual inspection value (time) is taken as the dissolution time.

### Advantages

The present invention surprisingly provides a high-salt food concentrate in the form of a gel based on the natural gelling agent kappa carrageenan. It provides a gel system which is reduced in complexity compared to systems which require combinations of gelling systems. The invention provides a system wherein the gelling temperature and solidification time of the food concentrate can be manipulated to the needs of the production line and the specific recipe (e.g. presence of particles) of the food concentrate. It further provides a system wherein the melting temperature and dissolution time can be adjusted to the type of food concentrate. Furthermore the system allows for the use of a relatively low amount of carrageenan gelling agent. Syneresis, i.e. separation of water from the gel structure during storage, and which is sometimes observed in high-salt food concentrates, was not observed. After dilution in water of the food concentrate by the consumer, an undesired thickening or even gel formation upon cooling down of the dissolved product was not observed. In this way, the present invention contributes to a food concentrate in the form of a gel which shows improvements during production and which resembles better the features of a home made product regarding appearance and behaviour during its use.

The invention will now be exemplified by the following, not limiting, examples.

### Example 1:

Kappa carrageenan (Sigma Aldrich, LotBCBF0535V) solutions of 1% gum in 25% NaCl (on water content) were prepared by heating to different temperatures between 25 °C and 45 °C for 20 min after mixing. The gum concentration reflects the actual kappa carrageenan amount, i.e. without possible additional ingredients present in the commercial kappa carrageenan. The salt was added either before the addition of carrageenan (pre-addition) or after (post-addition).

| Comparative Example | Salt addition | Activation Temperature (°C) | Concentration of NaCl (wt% based on water content) | Gum concentration (wt% based on water content) | Result |
|---|---|---|---|---|---|
| 1A | pre | 32 | 25 | 1 | Precipitate |
| 1B | pre | 45 | 25 | 1 | Precipitate |
| 1C | post | 25 | 25 | 1 | Viscous liquid |
| 1D | post | 32 | 25 | 1 | Viscous liquid |
| 1E | post | 45 | 25 | 1 | Viscous liquid |

No gel was obtained for experiments 1A-1E. The precipitate obtained for experiments 1 A and 1 B did not cover more than 25% of the sample volume. This comparative experiment shows that relatively low activation temperatures do not result in gel formation, irrespective of mode of salt addition.

### Example 2:

Kappa carrageenan (Sigma Aldrich, LotBCBF0535V) solutions of 1% gum in 25% NaCl were prepared by heating to different temperatures between 60 °C and 95 °C for 20 min after mixing. The salt was added either before the addition of carrageenan (pre-addition) or after (post-addition).

| Experiment | Salt addition | Activation Temperature (°C) | Concentration of NaCl (wt% based on water content) | Gum concentration (wt% based on water content) | Result |
|---|---|---|---|---|---|
| 2A (comp. Ex.) | pre | 62 | 25 | 1 | Precipitate |
| 2B (comp. Ex.) | pre | 75 | 25 | 1 | Precipitate |
| 2C (comp. Ex.) | pre | 95 | 25 | 1 | Precipitate |
| 2D | post | 62 | 25 | 1 | gel |
| 2E | post | 75 | 25 | 1 | gel |
| 2F | post | 95 | 25 | 1 | gel |

This example showed that temperature activation at 62°C or higher leads to gelation when salt is post-added. A gelling temperature could be set by adjusting the activation temperature. For experiments 2D, E and F, solification time, dissolution time, gelling temperature and melting temperature was within acceptable range for factory or consumer: This means that dissolution time (at 95°C) was within 2.5 minutes, noting that those samples with lowest activation temperature always dissolved quicker.

The rheological experiment was conducted as mentioned previously, with some modification to mimic typical cooling behaviour: After initial measurement at 75 °C at a frequency of 1 Hz, the sample was cooled at 5 °C /min and measurements continued down to 20 °C, after which is was kept there for another 20 minutes at 20 °C. The elastic and viscous moduli were recorded. Solidification time for these three samples was approximately 10 min (hence within 30 min), and gelling temperature was exceeding 40°C. The melting temperatures were between 60 and 95°C, noting that those samples with lowest activation temperature always melted at lower temperatures.

### Example 3:

Kappa carrageenan (Sigma Aldrich, LotBCBF0535V) solutions in different salt concentrations were prepared by heating to 75 °C for 20 min after mixing. The salt was added after addition of the carrageenan.

| Experiment | Salt addition | Concentration of NaCl | Gum concentration | Result |
|---|---|---|---|---|
| 3A | post | 25 | 1 | Gel |
| 3B | post | 20 | 1 | Gel |
| 3C (comp. Ex.) | post | 2 | 1 | Gel |
| 3D (comp. Ex.) | post | 0 | 1 | Gel |
| 3E | post | 25 | 0.6 | Gel |

After preparation, the liquid ingredient mixtures were transferred to a rheometer for the measurement of elastic and viscous moduli. The remaining liquid was transferred into sample containers and stored at room temperature. The rheological experiment was conducted as mentioned previously, with some modification to mimic typical cooling behaviour: After initial measurement at 75 °C at a frequency of 1 Hz, the sample was cooled at 5 °C /min and measurements continued down to 20 °C, after which is was kept there for another 20 minutes at 20 °C. The elastic and viscous moduli were recorded. All samples apart from sample 3D showed solidification during the rheological cooling experiment and thus within 30 min. The time during the rheological experiment wherein the sample showed a mature (i.e. levelling off) elastic modulus was taken as the solidification time. Sample 3D did not gel during the rheological experiment (which took maximally 55 min). The sample was stored at ambient temperature and inspected for increase in elastic behaviour and/or formation of a lumpy structure. This occurred after at least 24h.

| Experiment | Gelling temperature (°C) | Solidification time |
|---|---|---|
| Exp. 3A | 67 | 9 min |
| Exp. 3B | 45-50 | 10.5 min |
| Comp. Ex. 3C | 32-38 | 11 min |
| Comp. Ex. 3D | Room temperature | Solidification >>30 min |
| Exp. 3E | 60 | 7 min |

The gelling temperature can be influenced by the level of salt in the food concentrate and the temperature that is used during heat activation. It was observed that gel systems with low salt (comparative example 3C and 3D) had a gelling temperature (room temperature or slightly above) that is considered too low for efficient production of a food concentrate. Example 3D showed a solidification time which is considered too long for efficient production of gelled food concentrates. The gel systems 3A, 3B and 3E allow efficient production of food concentrate, as their gelling temperature is above 40 °C but below 75 °C.

### Example 4:

**A food concentrate was prepared, of the following composition:**

| Composition | Composition | Amount |
|---|---|---|
| Carrageenan | 1% | 5g |
| NaCl | 25% | 125 g |
| Yeast extract | 1% | 5g |
| Chicken fat | 5% | 25 g |
| Glucose syrup | 2% | 10 g |
| water | 66% | 330 g |
| Total | 100% | 500 g |

The food concentrate was prepared by putting water into a Thermomix vessel and adding glucose syrup to it. The chicken fat was melted in a beaker on a hot plate set to 50 °C separately from the vessel. Then, the Thermomix vessel was heated to 75 °C upon stirring at level 3-4. First, the gum (kappa carrageenan, Sigma Aldrich, LotBCBF0535V) was added into the water/glycerol mixture at low temperature. When the temperature of the vessel had reached 50 °C, the melted fat and the yeast extract were added to the vessel. After the vessel had reached 75 °C, it was operated at 75 °C for further 20 min. After 10 min it was checked that the gum and the yeast extract were dissolved completely and did not form lumps. Then, the salt was added. After the end of the heating program, the viscous ingredient solution was filled into small sample containers (tubs), wherein 25 g was poured into each tub. The solidification time was acceptable (approx. 10 min).

A small part of the mixture was transformed to a rheometer and its rheology measured upon cooling. An initial elastic modulus of 304 Pa was measured at 75 °C, and a modulus of 1885 Pa at 20 °C. The gelling temperature was found to be 67 °C. 30g of the food concentrate dissolved fully in water of 95 °C in 1.92 min.

### Example 5: Formation of Kappa-carrageenan gels at high gum concentrations

Kappa carrageenan (Sigma 22048, Lot:BCBK1 080V ) solutions of different gum concentration at 25% NaCl (based on water) were prepared by heating to 70°C for 20 min during mixing. The gum concentration was varied between 3% (preferred) and 7% (not preferred). Salt was added either before (pre-addition) or after (post-addition) the addition of carrageenan. The elastic moduli and dissolution times were compared.

| Example | kappa carrageenan (wt%) based on water content | Salt addition | Activation temperature (°C) |
|---|---|---|---|
| 5A | 3 | pre | 70 |
| 5B | 3 | post | 70 |
| 5C (comp. Ex.) | 5 | pre | 70 |
| 5D (comp. Ex.) | 5 | post | 70 |
| 5E (comp. Ex.) | 7 | pre | 70 |
| 5F (comp. Ex.) | 7 | post | 70 |

### Process:

### Pre-addition:

a) Ingredient powders (i.e. kappa- carrageenan and NaCl) and water were weighed
b) Water and salt were added into the vessel of a Thermomix TM 31 temperature-controlled mixer (Vorwerk/ Germany)
c) A time of 5 min was programmed, during which the water was mixed with the salt to dissolve the salt at ambient temperature, at a mixing speed 3-4.
d) Kappa-carrageenan was added
e) A time of 5 min was programmed, during which the kappa-carrageenan was mixed with the salt water, at ambient temperature, at a mixing speed 5-6.
f) The solution was heated to the activation temperature for 20 min, at the same mixing speed
g) The resulting product was filled hot into a container
h) The solution was cooled quiescently to ambient temperature

### Post-addition:

a) Ingredient powders (i.e. kappa- carrageenan and NaCl) and water were weighed
b) Water and kappa- carrageenan were added into the Thermomix TM 31 vessel
c) A time of 5 min was programmed, during which the water was mixed with the kappa carrageenan to dissolve the kappa-carrageenan, at ambient temperature, at a mixing speed 5-6.
d) A time of 20 min was programmed, during which the kappa-carrageenan was mixed with the water, while heating to the activation temperature, at a mixing speed 5-6.
e) Salt was added quickly during stirring
f) A time of 5 min was programmed, during which the kappa-carrageenan solution was mixed with the salt to dissolve the salt, at activation temperature, at a mixing speed 5-6.
g) The resulting product was filled hot into a container
h) The solution was cooled quiescently to ambient temperature

### Results:

5A and 5B resulted in a weak gel at high temperature which still could be filled into tubs and leads to a homogenous gel at low temperatures, with a smooth glossy surface when filled into a small sample container. A more than 10 fold increase in the gel modulus G' at 70°C to that at 20°C. was measured during a cooling cycle at a cooling rate of 5°C/min.

Comparative examples 5C-5F resulted in a very strong gel partially forming already in the process. When filled into a small sample container, the surface after cooling was non-homogenous due to the individual pieces present. In order to measure the elastic moduli of these products, the already formed pieces had to be heated up to 97°C to melt them to be able to place product into a rheometer. Then, the elastic moduli of 5E and 5F were measured from 97°C to 20°C, applying a cooling rate of 5°C/min. To provide a good comparison, Examples 5A and 5B were measured according to the same procedure. The results are provided in the table below.

After 48h of storage, the dissolution time was measured in the same manner for gels from small plastic cups. The elastic moduli at 20°C were much higher than 10000 Pa, and the dissolution time was above 15 min for unit portions of weights below 30 g. This is not preferred for a food concentrate that should quickly dissolve in hot water. The dissolution time was measured for gels of similar weight.

| | **G' [Pa] at 70°C** | **G" [Pa] at 70°C** | **G' [Pa] at 20°C** | **G" [Pa] at 20°C** | **Dissolution time (90%) [min:sec]** |
|---|---|---|---|---|---|
| 5A | 209 | 59 | 8644 | 274 | 4-7 min |
| 5B | 291 | 60 | 7312 | 176 | 4-7 min |
| 5E | 6688 | 802 | 23860 | 2551 | >15 min |
| 5F | 3992 | 353 | 16420 | 1442 | > 15 min |

### Example 6: Influence of process conditions on the formation of food gels containing taste imparting ingredients

In this experiment, the importance of process conditions on gel formation of carrageenan gels is shown. In comparison to prior art (WO2012 097934 Experiment 11 B), no gel is obtained when the process was kept the same in the absence of the gel system (Xanthan gum /Locust Bean Gum).

The composition was prepared from the following ingredients:

| **Food composition** | wt% total | Wt% based on total water content |
|---|---|---|
| k-carrageenan, Sigma 22048-100G | 4.1 | 6.6 |
| water | 57.7 | |
| NaCl, 99.9% VWR27810.295 Batch:13F130010 | 9.8 | 14.5 |
| KCI, Merck 1.04936.1000 | 3.8 | 6.2 |
| Taste imparting ingredients (17.4% salt) | 24.5 | 29.8 |
| **Total** | **100.0** | |

**Total salt content on water:** 27.58% (Total NaCl content on water: 21.4%)

### Process:

Comparative example 6A: The food composition described above was prepared according to the following method, as stated in WO2012 097934:
a) Water was added to the vessel of a Thermomix TM31 temperature-controlled kitchen mixer (Vorwerk, Germany).
b) All ingredients were added simultaneously and quickly (30 sec) via the vessel opening at a mixing speed of 5-6.
c) The mixture was heated up to 90°C and kept at this temperature for at least 3 min while stirring (speed 5-6).
d) The resulting mixture was hot filled in glass containers, cooled quiescently and observed after 24h.

Example 6B: The same composition was prepared according to the following process:
a) Water was added to the vessel of a Thermomix TM31 equipment (Vorwerk, Germany).
b) Kappa-carrageenan was added and dissolved in water by stirring for 5 min at mixing speed of 3-4
c) The mixture was heated up to 80°C and kept at this temperature for at least 20 min while stirring (speed 5-6).
d) The taste imparting ingredients were added
e) The salt was added and dissolved in the vessel by stirring (speed 5-6) for 5 min at 80°C.
f) The resulting mixture was hot filled in glass containers, cooled quiescently and observed after 24h.

### Results:

***Comparative Example 6A:*** The mixture resulted in a liquid with a sedimented phase on the bottom after processing. It did not form a gel within 24 h. This comparative experiment shows that the process described in WO2012 097934 (Example 11 B) does not result in a gel when the salt-stable structuring material is absent. Due to the presence of high amounts of salt which slows down activation, the process time is not sufficient to activate the kappa-carrageenan, even though a high activation temperature of 90°C is used.

***Experiment 6B:*** The mixture formed a strong, stiff paste-like gel quickly after processing. This experiment shows that the process according to this invention results in a gel, even when the same composition as in WO2012 097934 is used. The kappa- carrageenan is activated by dissolving it in pure water at an activation temperature of 80°C first, before the salt is added. Due to the uneconomically high gum concentration (6.6% on water), an extremely thick liquid is formed during the process that is too thick (not flowable) to dose. In a factory process, it would be very difficult to fill into small cups. Therefore, the product is still not a preferred embodiment of this invention.

### Example 7: Replacement of kappa-carrageenan by iota- carrageenan

Gel formation of iota- carrageenan solutions were compared to these of kappa-carrageenan (Example 2A, 2D and Example 5) under the same conditions.

| Comparative example | lota carrageenan (wt%) based on water content | Salt addition | Activation temperature [°C] |
|---|---|---|---|
| 7A | 1 | pre | 60 |
| 7B | 1 | post | 60 |
| 7C | 1 | pre | 70 |
| 7D | 1 | pre | 80 |
| 7E | 1 | post | 80 |
| 7F | 3 | pre | 70 |
| 7G | 3 | post | 70 |
| 7H | 5 | pre | 70 |
| 7I | 5 | post | 70 |

### Process

The pre- addition and post-addition processes were conducted as described for kappa-carrageenan in Experiment 5.

### Results:

Comparative Examples 7A-C resulted in a liquid which did not become a gel after 24h, similar to examples 1C-E. In comparison to Example 2D, no gel was obtained for 7B. lotacarrageenan is thus not preferred in producing gels at low activation temperature.

Comparative examples 7D and 7E resulted in weak, pourable substances of G', G" < 30Pa that are not self-supportive or shape stable gels. Compared to examples 2D and 2E (1% kappa-carrageenan resulting in a shape-stable gel), iota-carrageenan under the same process conditions is less preferred as no gel is obtained.

Comparative examples 7F and 7G already formed gels during processing. The gel had to be broken into pieces to be filled into containers. Gel formation and destruction in the process resulting in pieces of gel is not preferred as the gel can't be filled homogeneously into small cups in a factory process. In order to measure the elastic moduli of these products, the already formed pieces had to be heated up to 97°C to melt them to be able to place the product into a rheometer. Moreover, the increase in G', G" between 70°C and 20°C was only approximately 30%. Thus, a solidification temperature could not be identified between 70°C and 20 °C.

Comparative examples 7H- 7I resulted in chunks of gel that had already formed and solidified during processing. The gel pieces have to be scraped out of the vessel. An assembly of gel pieces is obtained that is not preferred. In order to measure the elastic moduli of these products, the already formed pieces had to be heated up to 97°C to melt them to be able to place the product into a rheometer. Moreover, the increase in G', G" between 70°C and 20°C was only approximately 30%. Thus, a solidification temperature could not be identified between 70°C and 20°C.

## Claims

1. Packaged food concentrate in the form of a gel, comprising:
• from 7 to 40 wt% of salt, wt% based on the total water content, wherein the amount of salt is calculated as (weight of salt / (weight of salt + weight of total water content))*100%,
• water
• dissolved kappa-carrageenan, wherein kappa-carrageenan is present in an amount of from 0.1 wt % to 4 wt% (wt% based on the total water content, and calculated as (weight of kappa-carrageenan)/(weight of kappa-carrageenan + weight of total water content))*100%,
• taste imparting components.

2. Packaged food concentrate according to claim 1, wherein the salt comprises from 16 wt% to 40 wt% of NaCl, based on the total water content, wherein the amount of NaCl is calculated as (weight of NaCl / (weight of NaCl + weight of total water content))*1 00%,

3. Packaged food concentrate according to any one of the preceding claims, wherein the amount of xanthan gum, galactomannan and glucomannan taken together is less than 1 wt% based on the total water content of the food concentrate.

4. Packaged food concentrate according to any one of the preceding claims, wherein the amount of xanthan gum is less than 1 wt%, based on the total water content of the food concentrate.

5. Packaged food concentrate according to any one of the preceding claims, further comprising locust bean gum, preferably in an amount of from 0 wt% to 1 wt% based on the total water content of the food concentrate.

6. Packaged food concentrate according to any one of the preceding claims, further comprising savoury taste enhancer selected from the group consisting of monosodium glutamate (MSG), 5'-ribonucleotides, organic acids and mixtures thereof.

7. Packaged food concentrate according to any one of the preceding claims, wherein the taste imparting components comprise one or more of:
• yeast extract;
• hydrolyzed proteins of vegetables-, soy-, fish-, or meat-origin;
• liquid or dissolvable extracts or concentrates selected from the group consisting of meat, fish, crustaceans, herbs, fruit, vegetable and mixtures thereof;
• particles of meat;
• particles of fish;
• particles of crustaceans;
• particles of plant;
• particles of fungi;
• flavours.

8. Packaged food concentrate according to any one of the preceding claims, wherein the food concentrate has a melting temperature of lower than 90°C, preferably of lower than 85°C.

9. Packaged food concentrate according to any one of the preceding claims, wherein the food concentrate is a bouillon concentrate, a soup concentrate, a sauce concentrate, a gravy concentrate or a seasoning concentrate.

10. Process to prepare a packaged food concentrate according to anyone of the preceding claims, the process comprising the steps of:
a) Providing a mixture comprising kappa-carrageenan and water,
b) Heating the mixture comprising kappa-carrageenan and water to a temperature of higher than 60°C,
c) Adding taste imparting ingredients,
d) Dissolving salt in the mixture resulting from step b) or c),
e) Filling the mixture resulting from step d) into a packaging,
f) Solidifying.
to result in a packaged concentrate food concentrate in the form of a gel.

11. Process according to claim 10, wherein step b) comprises heating to a temperature of from 60°C to 90 °C, preferably of from 60°C to 85°C, more preferably of from 65°C to 80°C.

12. Process according to claim 10 or 11, wherein dissolving salt into the mixture resulting from step b) or c) comprises application of shear.

13. Process according to any one of claims 10 to 12, wherein the mixture resulting from step e) has a gelling temperature of lower than 80°C, preferably of lower than 70°C.

14. Use of a packaged food concentrate according to any one of claims 1 to 10 for preparing a bouillon, a soup, a sauce a gravy or a seasoned dish.

15. Use according to claim 14, comprises the step of diluting the concentrate food composition in an aqueous liquid, or mixing it into a dish, wherein the temperature of the aqueous liquid or dish is between 60°C and 100°C, preferably of between 65°C and 90°C.

## Patentansprüche

1. Verpacktes Lebensmittelkonzentrat in Form eines Gels, umfassend:
• 7 bis 40 Gew.-% Salz, Gew.-% bezogen auf den gesamten Wassergehalt, wobei die Menge des Salzes als (Gewicht des Salzes/(Gewicht des Salzes + Gewicht des gesamten Wassergehaltes))*100% berechnet ist,
• Wasser
• gelöstes kappa-Carragen, wobei das kappa-Carragen in einer Menge von 0,1 Gew.-% bis 4 Gew.-% vorliegt (Gew.-% bezogen auf den gesamten Wassergehalt und berechnet als (Gewicht des kappa-Carragens)/(Gewicht des kappa-Carragens + Gewicht des gesamten Wassergehalts))*100%,
• geschmacksvermittelnde Bestandteile.

2. Verpacktes Lebensmittelkonzentrat nach Anspruch 1, wobei das Salz 16 bis 40 Gew.-% NaCl, bezogen auf den gesamten Wassergehalt, umfasst, wobei die Menge an NaCl als (Gewicht NaCl/ (Gewicht NaCl + Gewicht des gesamten Wassergehalts))*100% berechnet ist.

3. Verpacktes Lebensmittelproduktkonzentrat nach irgendeinem der vorhergehenden Ansprüche, wobei die Menge an Xanthan, Galactomannan und Glucomannan, zusammengenommen, weniger als 1 Gew.-%, bezogen auf den gesamten Wassergehalt des Lebensmittelkonzentrats, beträgt.

4. Verpacktes Lebensmittelkonzentrat nach irgendeinem der vorhergehenden Ansprüche, wobei die Menge an Xanthan weniger als 1 Gew.-%, bezogen auf den gesamten Wassergehalt des Lebensmittelkonzentrats, beträgt.

5. Verpacktes Lebensmittelkonzentrat nach irgendeinem der vorhergehenden Ansprüche, des Weiteren umfassend Johannesbrotkernmehl, vorzugsweise in einer Menge von 0 Gew.-% bis 1 Gew.-%, bezogen auf den gesamten Wassergehalt des Lebensmittelkonzentrats.

6. Verpacktes Lebensmittelkonzentrat nach irgendeinem der vorhergehenden Ansprüche, des Weiteren umfassend Wohlgeschmackverstärker, ausgewählt aus der aus Mononatriumglutamat (MNG), 5'-Ribonucleotiden, organischen Säuren und Mischungen davon bestehenden Gruppe.

7. Verpacktes Lebensmittelkonzentrat nach irgendeinem der vorhergehenden Ansprüche, wobei die den Geschmack vermittelnden Bestandteile einen oder mehrere umfasst von:
• Hefeextrakt;
• hydrolysierte Proteine pflanzlichen, Soja-, Fisch- oder Fleisch-Ursprungs;
• flüssige oder lösbare Extrakte oder Konzentrate, ausgewählt aus der aus Fleisch, Fisch, Krustentieren, Gewürzen, Früchten, Gemüse und Mischungen davon bestehenden Gruppe;
• Teilchen von Fleisch;
• Teilchen von Fisch;
• Teilchen von Krustentieren;
• Teilchen von Pflanzen;
• Teilchen von Pilzen;
• Geschmacksstoffe.

8. Verpacktes Lebensmittelkonzentrat nach irgendeinem der vorhergehenden Ansprüche, wobei das Lebensmittelkonzentrat eine Schmelztemperatur von weniger als 90°C, vorzugsweise von weniger als 85°C, aufweist.

9. Verpacktes Lebensmittelkonzentrat nach irgendeinem der vorhergehenden Ansprüche, wobei das Lebensmittelkonzentrat ein Bouillon-Konzentrat, ein Suppenkonzentrat, ein Soßenkonzentrat, ein Bratensoßenkonzentrat oder ein Gewürzmittelkonzentrat darstellt.

10. Verfahren zur Herstellung eines verpackten Lebensmittelkonzentrats nach irgendeinem der vorhergehenden Ansprüche, wobei das Verfahren die folgenden Schritte umfasst:
a) Bereitstellen einer Mischung, die kappa-Carragen und Wasser umfasst,
b) Erhitzen der Mischung, die kappa-Carragen und Wasser umfasst, auf eine Temperatur von mehr als 60°C,
c) Zugeben von geschmacksvermittelnden Bestandteilen,
d) Lösen von Salz in der Mischung, die aus Schritt b) oder c) resultiert,
e) Einfüllen der Mischung, die aus Schritt d) resultiert, in eine Verpackung, und
f) Verfestigen,
um ein verpacktes Lebensmittelkonzentrat in Form eines Gels zu erhalten.

11. Verfahren nach Anspruch 10, wobei der Schritt b) das Erhitzen auf eine Temperatur von 60°C bis 90°C, vorzugsweise von 60°C bis 85°C und bevorzugter auf 65°C bis 80°C umfasst.

12. Verfahren nach Anspruch 10 oder 11, wobei das Auflösen des Salzes in der Mischung, die aus Schritt b) oder c) resultiert, die Anwendung von Scherung umfasst.

13. Verfahren nach irgendeinem der Ansprüche 10 bis 12, wobei die Mischung, die aus Schritt e) resultiert, eine Geliertemperatur von weniger als 80°C, vorzugsweise von weniger als 70°C, aufweist.

14. Verwendung eines verpackten Lebensmittelkonzentrats nach irgendeinem der Ansprüche 1 bis 10 zur Herstellung eines Bouillon-, eines Suppen-, eines Soßen-, eines Bratensoßen- oder eines Gewürzmittel-Gerichtes.

15. Verwendung nach Anspruch 14, umfassend den Schritt des Verdünnens der konzentrierten Lebensmittelzusammensetzung in einer wässrigen Flüssigkeit oder dessen Zumischen zu einem Gericht, wobei die Temperatur der wässrigen Flüssigkeit oder des Gerichts zwischen 60°C und 100°C, vorzugsweise zwischen 65°C und 90°C, liegt.

## Revendications

1. Concentré alimentaire emballé sous la forme d'un gel comprenant :
- de 7 à 40 % en poids de sel, par rapport à la teneur totale en eau en % en poids, la quantité de sel étant calculée par la formule (poids du sel / (poids du sel + poids de la teneur totale en eau))*100 % ;
- eau
- kappa-carraghénane dissous, le kappa-carraghénane étant présent en une quantité de 0,1 % en poids à 4 % en poids (par rapport à la teneur totale en eau en % en poids) et calculé par la formule (poids de kappacarraghénane)/(poids de kappa-carraghénane + poids de la teneur totale en eau))*100 % ;
- composants conférant du goût.

2. Concentré alimentaire emballé selon la revendication 1, dans lequel le sel comprend de 16 % en poids à 40 % en poids de NaCl, par rapport à la teneur totale en eau, la quantité de NaCl étant calculée par la formule (poids de NaCl/(poids de NaCl + poids de la teneur totale en eau))*100 %.

3. Concentré alimentaire emballé selon l'une quelconque des revendications précédentes, dans lequel la quantité de gomme xanthane, de galactomannane et de glucomannane ensemble est inférieure à 1 % en poids, par rapport à la teneur totale en eau du concentré alimentaire.

4. Concentré alimentaire emballé selon l'une quelconque des revendications précédentes, dans lequel la quantité de gomme xanthane est inférieure à 1 % en poids, par rapport à la teneur totale en eau du concentré alimentaire.

5. Concentré alimentaire emballé selon l'une quelconque des revendications précédentes, comprenant en outre une gomme de caroube, de préférence en une quantité de 0 % en poids à 1 % en poids par rapport à la teneur totale en eau du concentré alimentaire.

6. Concentré alimentaire emballé selon l'une quelconque des revendications précédentes, comprenant en outre un exhausteur de goût salé choisi dans le groupe constitué par le glutamate de monosodium (MSG), les 5'-ribonucléotides, les acides organiques et des mélanges de ceux-ci.

7. Concentré alimentaire emballé selon l'une quelconque des revendications précédentes, dans lequel les composants conférant du goût comprennent un ou plusieurs de :
- extrait de levure ;
- protéines hydrolysées de légumes, soja, poisson ou viande ;
- extraits ou concentrés liquides ou pouvant être dissous choisis dans le groupe constitué par les viandes, les poissons, les crustacés, les herbes, les fruits, les légumes et des mélanges de ceux-ci ;
- particules de viande ;
- particules de poisson ;
- particules de crustacés ;
- particules de plantes ;
- particules de champignons ;
- arômes.

8. Concentré alimentaire emballé selon l'une quelconque des revendications précédentes, dans lequel le concentré alimentaire a une température de fusion inférieure à 90 °C, de préférence inférieure à 85 °C.

9. Concentré alimentaire emballé selon l'une quelconque des revendications précédentes, dans lequel le concentré alimentaire est un concentré de bouillon, un concentré de soupe, un concentré de sauce, un concentré de jus ou un concentré d'assaisonnement.

10. Procédé de préparation d'un concentré alimentaire emballé selon l'une quelconque des revendications précédentes, le procédé comprenant les étapes consistant à :
a) utiliser un mélange comprenant du kappa-carraghénane et de l'eau,
b) chauffer le mélange comprenant du kappa-carraghénane et de l'eau à une température supérieure à 60 °C,
c) ajouter des ingrédients conférant du goût,
d) dissoudre le sel dans le mélange résultant de l'étape b) ou c),
e) placer le mélange résultant de l'étape d) dans un emballage,
f) solidifier,
pour donner un concentré alimentaire emballé sous la forme d'un gel.

11. Procédé selon la revendication 10, dans lequel l'étape b) comprend le chauffage à une température de 60 °C à 90 °C, de préférence de 60 °C à 85 °C, plus préférablement de 65 °C à 80°C.

12. Procédé selon la revendication 10 ou 11, dans lequel la dissolution du sel dans le mélange résultant de l'étape b) ou c) comprend l'application d'un cisaillement.

13. Procédé selon l'une quelconque des revendications 10 à 12, dans lequel le mélange résultant de l'étape e) a une température de gélification inférieure à 80 °C, de préférence inférieure à 70 °C.

14. Utilisation d'un concentré alimentaire emballé selon l'une quelconque des revendications 1 à 10, pour la préparation d'un bouillon, d'une soupe, d'une sauce, d'un jus ou d'un plat d'assaisonnement.

15. Utilisation selon la revendication 14, comprenant l'étape de dilution de la composition alimentaire de concentré dans un liquide aqueux, ou de mélange de celle-ci dans un plat, dans laquelle la température du liquide aqueux ou du plat est comprise entre 60 °C et 100 °C, de préférence entre 65 °C et 90 °C.
